(19) Europäisches Patentamt

European Patent Office

Office européen des brevets

(11) Publication number: **0 510 679 A2**

## EUROPEAN PATENT APPLICATION

(21) Application number: **92107045.4**

(22) Date of filing: **24.04.92**

(51) Int. Cl.⁵: **G06F 11/00**

(30) Priority: **26.04.91 JP 123107/91**

(43) Date of publication of application:
**28.10.92 Bulletin 92/44**

(84) Designated Contracting States:
**DE FR GB NL**

(71) Applicant: **NEC CORPORATION**
**7-1, Shiba 5-chome Minato-ku**
**Tokyo 108-01(JP)**

(72) Inventor: **Yagi, Tsukasa**
**c/o NEC Corporation, 7-1, Shiba 5-chome**
**Minato-ku, Tokyo(JP)**
Inventor: **Imanisi, Yasuo**
**c/o NEC Field Service Co., Ltd., 4-28, Mita**
**1-chome, Minato-ku, Tokyo(JP)**

(74) Representative: **Vossius & Partner**
**Siebertstrasse 4 P.O. Box 86 07 67**
**W-8000 München 86(DE)**

(54) **Fault information gathering system for peripheral controllers in a computer system.**

(57) This fault information gathering system for peripheral controllers used in computer systems has, in its internal memory (30A,40A,50A) at a peripheral controller(20), a first work area (A1,B1,C1,...) for used in normal status and a second work area (A2,B2,C2,...) used when a fault is detected as a work areas (201) for each of the modules (A,B,C,...) constituting the program and also has a tracing area (203) to store the history data of program operation and a data area (202) to keep the area information in the tracing area (203) and the first work area used when a fault is detected. The system traces the program operation and writes the history data into the tracing area (203) and, when a fault is detected by the program, switches the work area to the second work area (A2,B2,C2,...). Upon detection of a fault by the program, the area information indicating the first work area (A1,B1,C1,...) and said tracing area (203) to said data area (202). The area information written into the data area (202) is provided upon instruction from the central processing unit (10), and thereafter, the data in the first work area and the tracing area (203) are transferred to the central processing unit upon instruction from the central processing unit (10).

FIG.2

TO CENTRAL
PROCESSING UNIT 10

30(40,50)

106 | 107

INFORMATION AREA NOTIFICATION MEANS | MEMORY TRANSFER MEANS

100

CONTROLLER MEANS | INTERNAL MEMORY | 30A(40A,50A)

FAULT NOTIFYING MEANS — 101

INTERNAL TRACING MEANS — 102

WORK AREA SWITCHING MEANS — 103

AREA INFORMATION WRITING MEANS — 104

TRACING STOP MEANS — 105

TO PERIPHERAL

# FIG.3

USE OF MEMORY

```
┌─────────────────────────┐
│ MODULE  A               │
├─────────────────────────┤
│ MODULE  B               │
├─────────────────────────┤
│ MODULE  C               │
│                         │
│                         │
│                         │
├─────────────────────────┤
│ WORK  AREA  A1          │
├─────────────────────────┤
│ WORK  AREA  A2          │
├─────────────────────────┤
│ WORK  AREA  B1          │
├─────────────────────────┤
│ WORK  AREA  B2          │
├─────────────────────────┤
│ WORK  AREA  C1          │
├─────────────────────────┤
│ WORK  AREA  C2          │
│                         │
│                         │
│                         │
│                         │
├─────────────────────────┤
│ FAULT  DATA  AREA       │
├─────────────────────────┤
│ INTERNAL  TRACE  AREA   │
└─────────────────────────┘
```

PROGRAM AREA
200

WORK AREA
201

202 — FAULT DATA AREA

203 — INTERNAL TRACE AREA

This invention relates to a fault information gathering system to gather information on fault generated at peripheral controllers of a computer system.

A computer system generally consists of a central processing unit, a plurality of peripheral controllers, and various peripherals controlled by the peripheral controllers. In such a computer system, when any fault occurs in a peripheral controller, the central processing unit gathers different types of information on different faults by a common method regardless of the type of the peripheral controller. Specifically, such a system is designed so that, if a fault occurs in a peripheral controller, the central processing unit sends an instruction asking for transfer of fault information and the faulting peripheral controller transfers, for example, data or trace information for the work area of the program to the central processing unit thereupon. The same transfer instruction is sent from the central processing unit for any fault of any peripheral controller, and the data in the predetermined area is transferred upon the instruction regardless of the type of the fault.

In other words, even when the program of the applicable peripheral controller consists of a plurality of modules, the fault information sent upon a transfer instruction from the central processing unit is the work area contents and internal tracing results of all modules.

As described above, the conventional method to gather fault information for peripheral controllers is invariable regardless of the contents of the fault. This means that the optimum information for fault analysis is not necessarily gathered, and the determination of the cause can be often time-consuming.

Another drawback of the conventional method is that the program control is suspended until the completion of fault data transfer in the event of a fault.

It is the primary object of this invention to provide a fault information gathering system for peripheral controllers used in computer systems without such drawbacks which gathers different fault data for different faults and thereby reduces time required for determining cause of a fault.

Another object of the invention is to provide a fault information gathering system for peripheral controllers used in computer systems which enables gathering of fault data without suspending the control operation.

According to a preferred embodiment of this invention to attain such objects, a fault information gathering system for a computer system to gather information on fault at peripheral controllers comprises a central processing unit for data processing and peripheral controllers to control various peripherals for data transfer to and from the central processing unit and the peripheral controller consists of memory means having the first work area for use in normal status and the second work area used when a fault is detected as the work areas for the program controlling the peripherals and also having a tracing area to store history data of the program operation and a data area to keep the area information in the tracing area and the first work area used at the time of fault detection, tracing means to trace the operation of the program and write the history data to the tracing area of the memory means, switching means to switch the work area to the second one when a fault is detected by the program, writing means to write the area information indicating the first work area and the tracing area to the data area when a fault is detected by the program, notification means to report the area information written in the data area to the central processing unit and transfer means to transfer the data in the first work area and tracing area to the central processing unit.

According to a preferred embodiment of the invention, in a fault information gathering system for a computer system to gather information on fault at peripheral controllers, the notification means for area information reports the area information and the transfer means for fault information transfers the fault information, both according to the instructions from the central processing unit.

According to a preferred embodiment of the invention, in a fault information gathering system for a computer system to gather information on fault at peripheral controllers, the program of the peripheral controller comprises a plurality of modules and each of them has the first and the second work areas.

According to a preferred embodiment of the invention, in a fault information gathering system for a computer system to gather information on fault at peripheral controllers, the writing means to write area information writes the starting addresses and sizes of the work area and the tracing area as the area information.

According to another preferred embodiment of this invention to attain the above objects, a fault information gathering system for a computer system to gather information on fault at peripheral controllers comprises a central processing unit for data processing and peripheral controllers to control various peripherals for data transfer to and from the central processing unit, and the peripheral controller is provided with memory means having the first work area for use in normal status and the second work area for use when a fault occurs as the work areas for the program controlling the peripherals, and also having a tracing area to store history data of operation by the program and a data area to keep the area information in the tracing area and the first work area used at the time of fault detection, means to detect a fault and to notify the central processing unit of occurrence of fault, tracing means to trace the operation of the control program and write the history data to the tracing area of the memory means, switching means to switch the work area to the second one when a fault occurs, means to stop the tracing operation by the tracing means when a fault occurs, writing means to write the data indicating the area of the first work area and the tracing area to the data area when a fault occurs, notification means to report the area information written in the data area to the central processing unit according to the instruction from the central processing unit and transfer means to transfer the data in the first work area and tracing area to the central processing unit according to the instruction from the central processing unit.

According to still another preferred embodiment of the invention to attain the above objects, a fault information gathering system for a computer system to gather information on fault at peripheral controllers consists of a central processing unit for data processing and peripheral controllers to control various peripherals for data transfer to and from the central processing unit, and the peripheral controller comprises memory means having the first work area for use in normal status and the second work area used when a fault is detected as the work areas for the program controlling the peripherals and a switching means to switch the work area from the first one to the second one when a fault occurs.

According to still another preferred embodiment of this invention to attain the above objects, a fault information gathering system for a computer system to gather information on fault at peripheral controllers comprises a central processing unit for data processing and peripheral controllers to control various peripherals for data transfer to and from the central processing unit, and the peripheral controller comprises memory means having a program to control the peripherals consisting of a plurality of modules, each of which is provided with the first work area for use in normal status and the second work area used when a fault is detected as the work areas, and also having a tracing area to store history data of operation by the program and a data area to keep the area information in the tracing area and the first work area used at the time of fault detection, means to detect a fault and to notify the central processing unit of occurrence of fault, tracing means to trace the operation of the control program and write the history data to the tracing area of the memory means, switching means to switch the work area to the second one when a fault occurs, means to stop the tracing operation by the tracing means when a fault occurs, writing means to write the data indicating the area of the first work area and the tracing area to the data area when a fault occurs, notification means to report the area information written in the data area to the central processing unit according to the instruction from the central processing unit and transfer means to transfer the data in the first work area and tracing area to the central processing unit according to the instruction from the central processing unit.

Other objects, characteristics and effects of the present invention will be clarified in the detailed description below.

BRIEF DESCRIPTION OF THE DRAWINGS

Fig. 1 is a block diagram to show the configuration of a computer system according to an embodiment of the present invention.

Fig. 2 is a block diagram to show functions for gathering fault information at a peripheral controller.

Fig. 3 is a diagram to show a configuration example of internal memory for a peripheral controller.

Fig. 4 is a flowchart to illustrate the operation processing of fault information gathering by a peripheral controller.

Fig. 5 is a diagram to show an example of area information written to the fault data area of the internal memory.

Fig. 6 is a diagram to show an example of area information transferred from a peripheral controller to the central processing unit.

DESCRIPTION OF THE PREFERRED EMBODIMENT

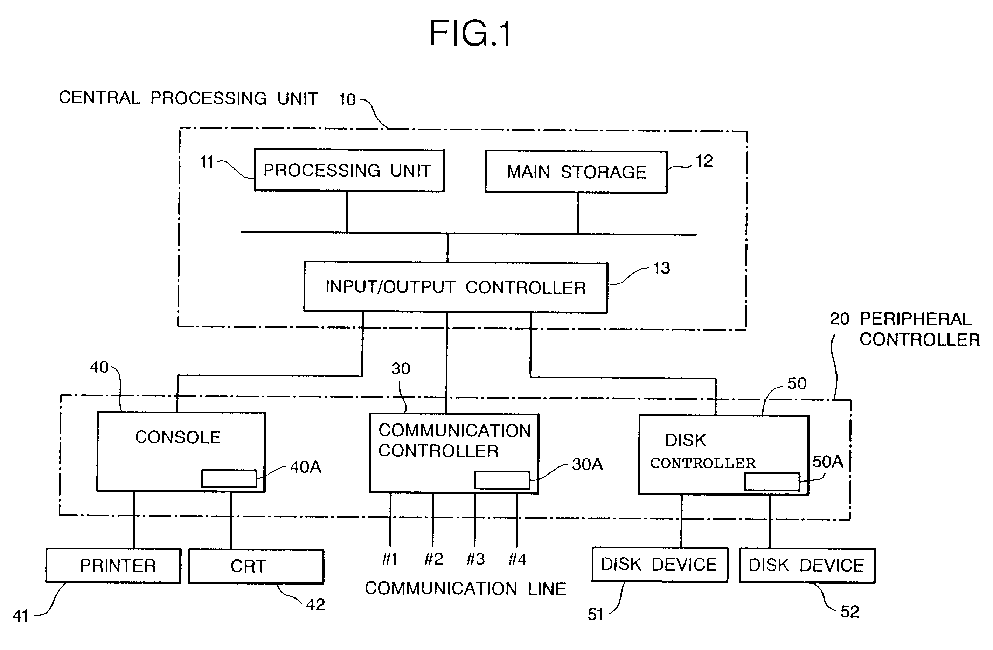

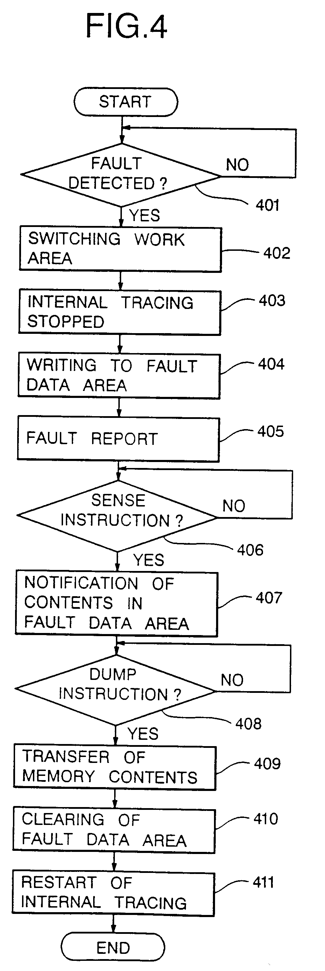

A preferred embodiment of the present invention is described referring to Figs. 1 to 6. Fig. 1 shows the configuration of a computer system according to an embodiment of this invention.

In Fig. 1, this computer system comprises a central processing unit 10 for data processing, a peripheral controller 20 for control of peripherals, and various peripherals controlled by the peripheral controller 20. The central processing unit 10 is provided with a processing unit 11, a main storage 12, an input/output controller 13. The central processing unit 10, after receiving fault report from the peripheral controller 20, issues SENSE instruction to the peripheral controller 20 and thereby obtains notification of the area where the fault occurs from the peripheral controller 20, and issues DUMP instruction to cause the data contents in the notified area to be transferred.

The peripheral controller 20 comprises a communication controller 30, a console 40 and a disc controller 50. The communication controller 30 is connected with communication lines Nos. 1, 2, 3 and 4 for data exchange with other computer systems. The console 40 is connected with a printer 41 and a display unit 42 such as a CRT device. The disc controller 50 is connected with disc devices 51 and 52, which are for hard discs or floppy discs. The communication controller 30, the console 40 and the disc controller 50 of the peripheral controller 20 are provided with internal memories 30A, 40A and 50A respectively. These units are operated by the control programs (firmware in this embodiment) stored in these internal memories 30A, 40A and 50A for control of data transfer between the central processing unit 10 and the peripherals.

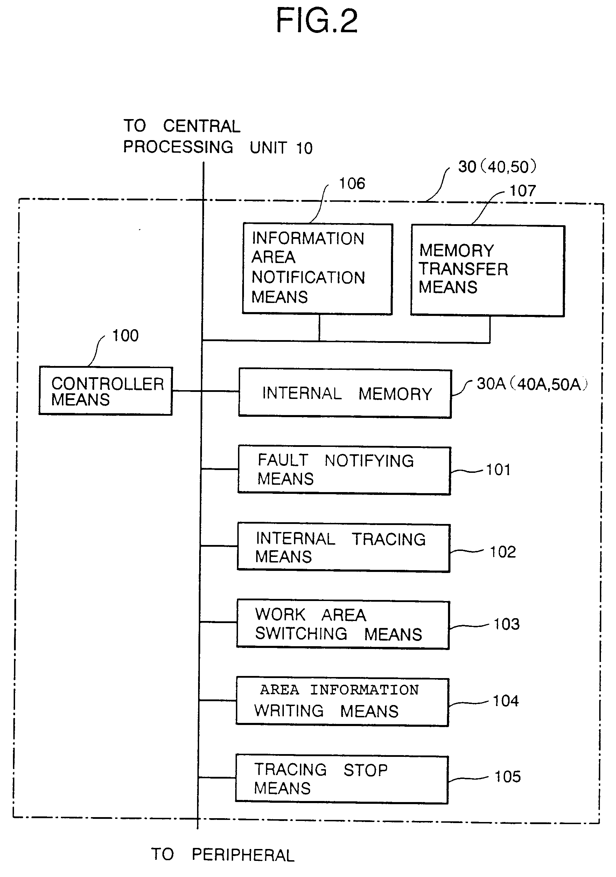

Fig. 2 is a block diagram to show functions of the communication controller 30, the console 40 and the disc controller 50. Each of these units comprises controller means 100, an internal memory 30A (or 40A or 50A), a fault notifying means 101, internal tracing means 102, work area switching means 103, area information writing means 104, tracing stop means 105, information area notification means 106 and memory transfer means 107.

The controller means 100 uses firmware, which is a program stored at each of the communication controller 30, console 40 and disc controller 50 to provide control in a way suitable to each unit. The fault notifying means 101 reports occurrence of a fault to the central processing unit 10 when the firmware module detects a fault at a peripheral controller. The internal tracing means 102 traces the operation of the firmware and writes its history data to the internal memory 30A (or 40A or 50A). The work area switching means 103 switches the work area for the firmware module to the other one when a fault occurs. The area information writing means 104 writes the addresses and other data of the work area used when the fault occurs and the internal tracing area storing the program history data to the internal memory 30A (or 40A or 50A) as the area information. The tracing stop means 105 stops tracing by the internal tracing means 102 when a fault occurs. The information area notification means 106 reports the area information upon instruction (SENSE instruction) from the central processing unit 10 and the memory transfer means 107 transfers the contents of the area indicated by the area information to the central processing unit 10 upon instruction (DUMP instruction) from the central processing unit 10. For reference, faults at peripheral controllers include self-contradiction (receipt of impossible message, for example) of firmware and hardware failure.

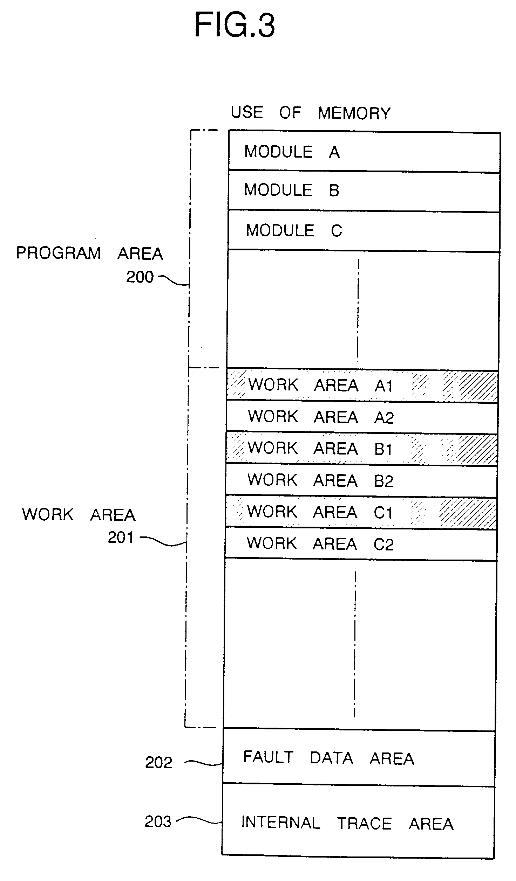

Fig. 3 shows a configuration example of an internal memory 30A, 40A or 50A. The internal memory 30A, 40A or 50A comprises a program area 200 stored as firmware, a work area 201, a fault data area 202, a tracing area 203. The program area 200 has a plurality of modules (module A, module B, module C ..... ). The work area 201 consists of a plurality of work areas independently used by each of the above modules A, B, C ...... Specifically, each module is provided with two work areas. For example, the module A has the work areas A1 and A2, module B has B1 and B2, and module C has C1 and C2. Different modules have different sizes, but the two work areas used by one module are of the same size. The modules A, B, C ... usually use one of the work areas A1, B1, C1 ... and switches to use the other work areas A2, B2, C2 ... when any fault occurs. The modules A, B, C ... do not use both of the work areas at a time. These work areas are used for data storage by the modules and for control flags indicating the module status.

When either of the modules A, B, C ... detects a fault and causes the work area to be switched, the starting address and size of the work area A1, B1, C1 or other used by the module when the fault is detected and the starting address and size of the tracing area 203 are stored into the fault data area 202 by the area information writing means 104 as the area information.

To the tracing area 203, the internal tracing means 102 writes history data obtained through tracing the operation of the firmware controlling the controllers one after another. The history data repeatedly overwrites the data in the tracing area 203.

Now referring to Figs. 3 to 6, the operation in this embodiment is described. The explanation below is for the operation between the communication controller 30 and the central processing unit 10 of a computer system.

In usual operation, the operation of the entire firmware is traced by the internal tracing means 102 of the communication controller 20, so that the history data is written one after another to the internal tracing area 203 of the internal memory 30A, 40A, or 50A.

Now referring to Fig. 3, suppose the module A in the program area 200 uses the work area A1, the module B uses the work area B1, and the module C uses the work area C1. If the module A detects any fault (firmware contradiction or hardware failure) (Step 401), then the work area switching means 103 switches the work area to be used by the module A from the work area A1 to the work area A2 (Step 402). This switching of the work area allows the module A to continue its operation using the work area A2 without any suspension of processing until completion of fault information gathering.

The tracing stop means 105 here stops the tracing operation by the internal tracing means 102 (Step 403). This results that the internal tracing area 203 has the history data up to the occurrence of fault.

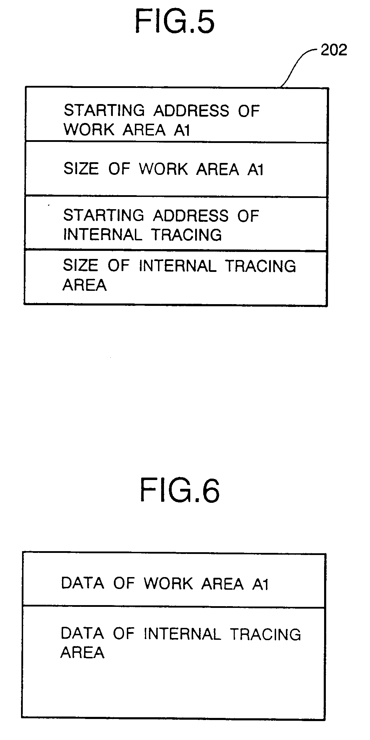

The information area writing means 104 writes, to the fault data area 202, the area information including the starting address and size of the work area A1 used when the fault is detected and those of the internal tracing area 203 containing the history data (Step 404). Fig. 5 shows contents of the fault data area 202 with the area information written in the above Step. The fault notifying means 101 reports occurrence of fault to the central processing unit 10 (Step 405).

Then, with continuing usual operations, the peripheral controllers wait for SENSE instruction asking for data in the fault data area 202 from the central processing unit 10 (Step 406). Upon receiving SENSE instruction from the central processing unit 10, area information data as shown in Fig. 5, which is written in the fault data area 202 is notified to the central processing unit 10 by the area information notification means 106 (Step 407). Then the system waits for DUMP instruction specifying the area to store the fault information in the internal memory 30A, 40A or 50A from the central processing unit 10, which has learned the area where the fault information is stored through SENSE instruction (Step 408).

Upon receipt of DUMP instruction from the central processing unit 10, the memory transfer means 107 transfers the data in the specified areas (the work area A1 and the internal tracing area 203 in this example) to the central processing unit 10 (Step 409). Based on the data thus sent, the central processing unit 10 seeks for the cause of the fault.

Thereafter, the communication controller 30 clears the data in the fault data area 202 (Step 410) and restarts the tracing operation by the internal tracing means 102 (Step 411), and thereby gets ready for next detection of a fault.

It is needless to say that the same processing is performed for a fault occurring at the module B or C.

As described above, when any fault for which fault information should be gathered occurs, the system enables gathering the trace data showing content and operation history of the work area for the module where the fault occurs as fault information. This means that fault information can be gathered effectively, which leads to efficient determination of cause. In addition, since the central processing unit can gather fault information without recognizing the faulting device and the contents of the fault, this system is suitable for fault information gathering by a computer system to which a plurality of peripheral controllers are connected.

Further, according to this invention, the system is provided with two work areas for a module so that the work area for use is switched to the other when a fault occurs, and fault information can be gathered without suspending processing operation.

It is understood that the present invention is not limited to the preferred embodiment described above and that many modifications can be made in the invention without departing from the spirit thereof. It is intended to cover in the appended claims all such modifications as fall within the true spirit and scope of the invention.

## Claims

1. A fault information gathering system for a computer system to gather information on fault at peripheral controllers, comprising:
   a central processing unit (10) for data processing and peripheral controllers (20) to control various peripherals for data transfer to and from said central processing unit (10),
   said peripheral controller (20), comprising:
   memory means (30A,40A,50A) having a first work area (A1,B1,C1,...) for use in normal status and a second work area (A2,B2,C2,...) used when a fault is detected as a work areas (201) for a program controlling said peripherals and also having a tracing area (203) to store history data of said program operation and a data area (202) to keep the area information in the tracing area (203) and the first work area (A1,B1,C1,...) used at the time of fault detection;
   tracing means (102) for tracing the operation of said program and write the history data to the tracing area (203) of said memory means (30A,40A,50A);
   switching means (103) for switching the work area (201) to the second work area (A2,B2,C2,...) when a fault is detected by said program;
   writing means (104) for writing the area information indicating the first work area (A1,B1,C1,...) and said tracing area (203) to said data area (202) when a fault is detected by said program;
   notification means (106) for reporting the area information written in said data area (202) to said central processing unit (10); and
   transfer means (107) for transferring the data in said first work area (A1,B1,C1,...) and tracing area (203) to said central processing unit (10).

2. A fault information gathering system for a computer system to gather information on fault at peripheral controllers of Claim 1 wherein said notification means (106) for area information reports the area information and said transfer means (107) for fault information sends the fault information both according to the instructions from the central processing unit (10).

3. A fault information gathering system for a computer system to gather information on fault at peripheral controllers of Claim 1 or 2 wherein the program of the peripheral controller (20) comprises a plurality of modules (A,B,C,...), each of which having the first and the second work areas.

4. A fault information gathering system for a computer system to gather information on fault at peripheral controllers of any of Claims 1 to 3 wherein said writing means (104) to write area information is characterized by that it writes the starting address and size of the work area (A1,B1,C1,...) and the starting address and size of said tracing area (203) as the area information.

5. A fault information gathering system for a computer system to gather information on fault at peripheral controllers, comprising:
a central processing unit (10) for data processing and peripheral controllers (20) to control various peripherals for data transfer to and from said central processing unit (10),
said peripheral controller (20), comprising:
memory means (30A,40A,50A) having a first work area (A1,B1,C1,...) for use in normal status and a second work area (A2,B2,C2,...) for use when a fault occurs as a work areas (201) for the program controlling said peripherals, and also having a tracing area (203) to store history data of operation by said program and a data area (202) to keep the area information in the tracing area (203) and the first work area (A1,B1,C1,...) used at the time of fault detection;
means (101) for detecting a fault and for notifying said central processing unit (10) of occurrence of fault;
tracing means (102) for tracing the operation of said program and write the history data to the tracing area (203) of said memory means (30A,40A,50A);
switching means (103) for switching the work area to the second work area (A2,B2,C2,...) when a fault occurs;
means (105) for stopping the tracing operation by said tracing means (102) when a fault occurs;
writing means (104) for writing the data indicating the area of the first work area (A1,B1,C1,...) and said tracing area (203) to said data area (202) when a fault occurs;
notification means (106) for reporting the area information written in said data area (202) to said central processing unit (10) according to the instruction from said central processing unit (10); and
transfer means (107) for transferring the data in said first work area (A1,B1,C1,...) and tracing area (203) to said central processing unit (10) according to the instruction from said central processing unit (10).

6. A fault information gathering system for a computer system to gather information on fault at peripheral controllers of Claim 5 wherein the program of the peripheral controller (20) comprises a plurality of modules (A,B,C), each of which having the first and the second work areas.

7. A fault information gathering system for a computer system to gather information on fault at peripheral controllers of Claim 5 or 6 wherein said writing means (103) to write area information is characterized by that it writes the starting address and size of the work area (A1,B1,C1,...) and the starting address and size of said tracing area (203) as the area information.

8. A fault information gathering system for a computer system to gather information on fault at peripheral controllers, comprising:
a central processing unit (10) for data processing and peripheral controllers (20) to control various peripherals for data transfer to and from said central processing unit (10),
said peripheral controller (20), comprising:
memory means (30A,40A,50A) having a first work area (A1,B1,C1,...) for use in normal status and a second work area (A2,B2,C2,...) used when a fault is detected as a work areas (201) for the program controlling said peripherals, and
a switching means (103) for switching the work area from the first work area (A1,B1,C1,...) to the second work area (A2,B2,C2,...) when a fault occurs.

9. A fault information gathering system for a computer system to gather information on fault at peripheral controllers, comprising:
a central processing unit (10) for data processing and peripheral controllers (20) to control various peripherals for data transfer to and from said central processing unit (10), said peripheral controller (20), comprising:

memory means (30A,40A,50A) having a program to control said peripherals consisting of a plurality of modules (A,B,C,...), each of which is provided with a first work area (A1,B1,C1,...) for use in normal status and a second work area (A2,B2,C2,...) used when a fault is detected as a work areas (201), and also having a tracing area (203) to store history data of operation by said program and a data area (202) to keep the area information in the tracing area (203) and the first work area (A1,B1,C1,...) used at the time of fault detection;

means for detecting a fault and for notifying said central processing unit of occurrence of fault;

tracing means (102) for tracing the operation of said control program and write the history data to the tracing area (203) of said memory means;

switching means (103) for switching the work area to the second work area (A2,B2,C2,...) when a fault occurs;

means (105) for stopping the tracing operation by said tracing means (102) when a fault occurs;

writing means (104) for writing the data indicating the area of the first work area (A1,B1,C1,...) and said tracing area (203) to said data area (202) when a fault occurs;

notification means (106) for reporting the area information written in said data area (202) to said central processing unit (10) according to the instruction from said central processing unit (10); and

transfer means (107) for transferring the data in said first work area (A1,B1,C1,...) and tracing area (203) to said central processing unit (10) according to the instruction from said central processing unit (10).

10. A fault information gathering system for a computer system to gather information on fault at peripheral controllers of Claim 9 wherein said writing means (104) to write area information writes the starting address and size of the work area and the starting address and the size of said tracing area (203) as area information.

# FIG.1

CENTRAL PROCESSING UNIT 10

PROCESSING UNIT 11

MAIN STORAGE 12

INPUT/OUTPUT CONTROLLER 13

20 PERIPHERAL CONTROLLER

CONSOLE 40 / 40A

PRINTER 41

CRT 42

COMMUNICATION CONTROLLER 30 / 30A

#1 #2 #3 #4 COMMUNICATION LINE

DISK CONTROLLER 50 / 50A

DISK DEVICE 51

DISK DEVICE 52

# FIG.2

TO CENTRAL
PROCESSING UNIT 10

30 (40,50)

106

107

INFORMATION
AREA
NOTIFICATION
MEANS

MEMORY
TRANSFER
MEANS

100

CONTROLLER
MEANS

INTERNAL MEMORY

30A (40A,50A)

FAULT NOTIFYING
MEANS

101

INTERNAL TRACING
MEANS

102

WORK AREA
SWITCHING MEANS

103

AREA INFORMATION
WRITING MEANS

104

TRACING STOP
MEANS

105

TO PERIPHERAL

10

# FIG.3

USE OF MEMORY

PROGRAM AREA
200

WORK AREA
201

| MODULE A |
| MODULE B |
| MODULE C |
| |
| WORK AREA A1 |
| WORK AREA A2 |
| WORK AREA B1 |
| WORK AREA B2 |
| WORK AREA C1 |
| WORK AREA C2 |
| |

202 — FAULT DATA AREA

203 — INTERNAL TRACE AREA

11

# FIG.4

```
            ┌─────────┐
            │  START  │
            └─────────┘
                 │
                 ▼
            ╱ FAULT ╲      NO
           ⟨ DETECTED ? ⟩──────┐
            ╲       ╱          │
              │ YES      ╲401  │
              ▼                │
     ┌──────────────────┐      │
     │ SWITCHING  WORK  │──402 │
     │ AREA             │      │
     └──────────────────┘      │
              │                │
              ▼                │
     ┌──────────────────┐      │
     │ INTERNAL  TRACING│──403 │
     │ STOPPED          │      │
     └──────────────────┘      │
              │                │
              ▼                │
     ┌──────────────────┐      │
     │ WRITING  TO FAULT│──404 │
     │ DATA  AREA       │      │
     └──────────────────┘      │
              │                │
              ▼                │
     ┌──────────────────┐      │
     │ FAULT  REPORT    │──405 │
     └──────────────────┘      │
              │                │
              ▼                │
           ╱ SENSE ╲     NO    │
          ⟨ INSTRUCTION ?⟩─────┤
           ╲        ╱          │
              │ YES     ╲406   │
              ▼                │
     ┌──────────────────┐      │
     │ NOTIFICATION  OF │      │
     │ CONTENTS  IN     │──407 │
     │ FAULT  DATA  AREA│      │
     └──────────────────┘      │
              │                │
              ▼                │
           ╱ DUMP ╲      NO    │
          ⟨ INSTRUCTION ?⟩─────┘
           ╲        ╱
              │ YES     ╲408
              ▼
     ┌──────────────────┐
     │ TRANSFER  OF     │──409
     │ MEMORY  CONTENTS │
     └──────────────────┘
              │
              ▼
     ┌──────────────────┐
     │ CLEARING  OF     │──410
     │ FAULT  DATA  AREA│
     └──────────────────┘
              │
              ▼
     ┌──────────────────┐
     │ RESTART  OF      │──411
     │ INTERNAL  TRACING│
     └──────────────────┘
              │
              ▼
            ┌─────────┐
            │   END   │
            └─────────┘
```

# FIG.5

202

| STARTING ADDRESS OF WORK AREA A1 |
| --- |
| SIZE OF WORK AREA A1 |
| STARTING ADDRESS OF INTERNAL TRACING |
| SIZE OF INTERNAL TRACING AREA |

# FIG.6

| DATA OF WORK AREA A1 |
| --- |
| DATA OF INTERNAL TRACING AREA |